## Europäisches Patentamt

## European Patent Office

## Office européen des brevets

(19)

(11) Veröffentlichungsnummer: **0 201 780**
**B1**

(12) **EUROPÄISCHE PATENTSCHRIFT**

(45) Veröffentlichungstag der Patentschrift:
04.07.90

(51) Int. Cl.⁵: **G02B 21/34**

(21) Anmeldenummer: 86105721.4

(22) Anmeldetag: 25.04.86

(54) Einrichtung und Verfahren für zytologische und histologische Untersuchungen von Objektträgerpräparaten.

(30) Priorität: 27.04.85 DE 8512517 U

(43) Veröffentlichungstag der Anmeldung:
20.11.86 Patentblatt 86/47

(45) Bekanntmachung des Hinweises auf die Patenterteilung:
04.07.90 Patentblatt 90/27

(84) Benannte Vertragsstaaten:
AT BE CH DE FR GB IT LI LU NL SE

(56) Entgegenhaltungen:
DE-A- 2 849 713
DE-B- 1 160 107
US-A- 2 590 891
US-A- 2 590 892
US-A- 3 503 665
US-A- 3 654 091
US-A- 3 904 781
US-A- 4 441 793

(73) Patentinhaber: Hastka, Jan, Bollweg 5,
D-6802 Ladenburg(DE)
Patentinhaber: Zamorski, Janusz, Spiessstrasse 99a,
D-6050 Offenbach(DE)

(72) Erfinder: Hastka, Jan, Bollweg 5, D-6802 Ladenburg(DE)

(74) Vertreter: Dr. Fuchs, Dr. Luderschmidt Dipl.-Phys. Seids,
Dr. Mehler Patentanwälte, Abraham-Lincoln-Strasse 7,
D-6200 Wiesbaden(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung und ein Verfahren für zytologische und histologische Untersuchungen, bei welchen aufgrund der Verwendung von kostspieligen Medien die Untersuchungsfläche des Objektträgerpräparates begrenzt wird, insbesondere immunologische und ähnliche Untersuchungen. Sie betrifft außerdem eine dazugehörige Trennkammer.

Immunzytologische und immunhistologische Untersuchungen haben vor Jahren Eingang in die Praxis gefunden und sind besonders, nachdem eine ganze Palette monoklonaler Antikörper zur Verfügung steht, aus der modernen Routine-Diagnostik nicht wegzudenken, auch wenn sie wegen der hohen Antikörperpreise sowie des Arbeitsaufwandes der Laborkräfte nicht ganz billig sind. Bei dieser Untersuchungstechnik wird mit Hilfe markierter (Fluoreszenz, Enzyme) Antikörper die Existenz bestimmter Antigene im zu untersuchenden Material geprüft. Um mehrere Antigene gleichzeitig nachweisen zu können bzw. die Nachweisempfindlichkeit der Methode zu erhöhen, werden die Präparate in mehreren, jeweils durch Waschvorgänge getrennten Schritten mit mehreren Antikörperlösungen inkubiert.

Um Antikörper zu sparen, wird bei dem heutzutage üblichen manuellen Verfahren nur ein kleiner, vorher ausgewählter, mit einem Diamantenschreiber markierter Bereich des Präparates untersucht. Damit die Antikörperlösung nicht über den gesamten Objektträger zerfließt, sondern auf den gewünschten Bereich beschränkt bleibt, müssen die vorher befeuchteten Objektträger vor jeder Antikörperzugabe mit einem Tuch außerhalb des markierten Bereichs abgetrocknet werden. Dieser sich mehrmals wiederholende Arbeitsschritt nimmt sehr viel Zeit in Anspruch und ist in erster Linie dafür verantwortlich, daß nur wenige dieser zeitabhängigen Untersuchungen parallel durchgeführt werden können.

Eine Möglichkeit der Vereinfachung dieser Technik gibt es bisher nicht. Die mit dem Ziel der Automatisierung sowie einheitlichen Präparatenbehandlung entwickelte Einrichtung gemäß der DE-CS 29 15 248 mag zwar den zytologischen und histologischen Routine-Färbeverfahren genügen, ist aber für immunologische Methoden ungeeignet. So werden bei dieser Einrichtung die Reagenzien mittels Schlauchverbindungen zugeführt und die gesamten Objektträger wahllos beschichtet, wodurch sehr große Antiserummengen benötigt werden. Gerade diese Flüssigkeiten sind aber sehr teuer.

In der US-A 3 904 781 ist eine Einrichtung beschrieben, die zwar die Abgrenzung einer Fläche auf einem Objektträger ermöglicht, diese Einrichtung dient jedoch nicht der Untersuchung fertiger Präparate, sondern der Herstellung von Präparaten auf kleiner begrenzter Fläche, um bei der späteren mikroskopischen Beurteilung nicht den ganzen Objektträger zeitaufwendig absuchen zu müssen. Dabei wird ein auf seiner Unterseite glatter Ring auf einen Objektträger aufgesetzt und das später zu untersuchende Material in Form einer Zellsuspension aufgetragen. Würde man den Begrenzungsring mit seiner flachen Unterseite auf ein fertiges Präparat aufsetzen, wäre durch dessen Unebenheiten keine Abdichtung mehr gewährleistet. Flüssigkeit würde zwischen die Auflagefläche des Begrenzungsringes und den Objektträger eindringen, weswegen diese vorbekannte Anordnung für immunologische Färbemethoden ungeeignet wäre. Der Verbrauch an Antiserum wäre zu hoch und die vollständige Entfernung des Antiserums nicht möglich.

Die US-A 3 503 665 beschreibt eine Vorrichtung, bei der ein Ring auf einer Unterlage, z.B. einem Objektträger fest angebracht oder sogar einstückig mit ihr ausgebildet ist. Diese bekannte Vorrichtung wurde entwickelt, um die mikroskopische Beurteilung von Zellkulturen zu erleichtern und dient damit einem anderen Zweck. Wegen der festen Verbindung zwischen Ring und Objektträger ist sie für immunhistologische und immunzytologische Untersuchungen ungeeignet. Der festsitzende Ring würde nicht nur beim Auftragen der Probe behindern, er macht auch die mikroskopische Untersuchung eines Objektträgerpräparates unmöglich. Denn im Unterschied zu Zellkulturen, bei welchen die Zellen frei beweglich sind und beim Umlagern sich am Deckgläschen anordnen, womit sie sich für eine mikroskopische Untersuchung nahe genug am Mikroskopobjektiv befinden, haften bei Objektträgerpräparaten die Zellen bzw. das Gewebe an der Unterlage fest. Wegen des festsitzenden Ringes und des daraufliegenden Deckgläschens kann das Mikroskopobjektiv nicht nahe genug an die Zellen herangeführt werden.

Der vorliegenden Erfindung liegt daher die Aufgabe zugrunde, eine Vorrichtung und ein Verfahren zu schaffen, das die immunologische oder ähnliche Untersuchungen bei Wahrung des geringen Reagenzienverbrauchs vereinfacht und beschleunigt.

Diese Aufgabe wird erfindungsgemäß durch die kennzeichnenden Merkmale des Patentanspruches 1 gelöst.

Die Trennkammer dient dazu, zu verhindern, daß die auf den zu untersuchenden Bereich des Präparates aufgebrachten Reagenzien wegfließen können, so daß einerseits weniger Reagenzien benötigt werden und andererseits durch vereinfachte Handhabung mehrere Präparate parallel behandelt werden können. Die Trennkammer kann lösbar an dem Objektträgerhalter mittels Schrauben, Klemmen oder auch magnetisch befestigt werden.

Vorzugsweise ist die Trennkammer als Hülse ausgebildet. Ihre Dichtung kann beispielsweise aus einem chemisch resistenten, flüssigkeitsabweisenden Kunststoffmaterial oder Gummi hergestellt sein. Ebenso sollte die Hülse aus chemisch resistentem Material bestehen.

In einer bevorzugten Ausführungsform besteht die Hülse aus einem magnetisierbaren Werkstoff und im Objektträgerhalter ist unterhalb der Auflagefläche ein Magnet angeordnet. Entsprechend kann umgekehrt der Objektträger oder der Objektträgerhalter aus einem magnetisierbaren Material bestehen und die Hülse einen Magneten aufweisen. Zur Erleichterung der Abnahme der Trennkammer kann der Magnet unter dem Objektträger ein ein- und ausschaltbarer Elektromagnet sein.

Durch diese Anordnung kann auf einfache Weise die Trennkammer an dem Objektträger befestigt und leicht entfernt werden. Bei entsprechender Anordnung der Dichtung wird diese durch die magnetischen Kräfte zusammengepreßt und bewirkt die notwendige Abdichtung. Vorteilhafterweise nimmt der Objektträgerhalter mehrere Objektträger mit jeweils einer Trennkammer in einer Einheit auf. Zweckmäßigerweise ist in der Trennkammer eine Absaugdüse zur Entleerung der Kammer von Reagenzien angeordnet, wobei in einer bevorzugten Ausführungsform zur Schonung der Präparate und um die Ablösung und Beschädigung des untersuchten Materials beim Saugvorgang zu vermeiden, das Ende der Düse verschlossen wird und im Bereich der dem Präparat zugeordneten Seite seitliche Absaugöffnungen angebracht werden. Hiermit ist es möglich, bei Bedarf mittels einer an die Absaugdüse angeschlossenen Pumpe die in der Kammer befindliche Flüssigkeit nach dem jeweiligen Untersuchungsschritt zu entfernen. Die Absaugdüse kann sowohl fest an der Kammer befestigt als auch nur zum Absaugen manuell oder automatisiert in diese eingeführt werden. Werden die Trennkammern mit mehreren Düsen ausgestattet, so kann die aus einem Behälter zugeführte Flüssigkeit zugleich abgesaugt werden, wodurch der Waschvorgang automatisiert werden kann.

In einer weiter bevorzugten Ausführungsform ist die Absaugdüse über ein Ventil mit einem im Inneren hohl ausgebildeten Objektträgerhalter verbunden, der an eine externe Pumpe angeschlossen ist. Mittels dieser Pumpe kann bei Bedarf im Inneren des Objektträgerhalters Unterdruck erzeugt und durch den Einsatz der Ventile jeweils aus einer vorgewählten Kammer die Flüssigkeit abgesaugt werden. Desweiteren kann der Objektträgerhalter einschließlich der Trennkammern von einer Abdeckung umgeben sein, wobei der von der Abdeckung umgebene Raum eine geregelte Heizung enthält. In diesem abgeschlossenen Raum kann mittels eines Temperaturreglers die gewünschte konstante Temperatur eingehalten werden. Es kann jedoch auch jede einzelne Kammer mit einer eigenen Abdeckung versehen werden, so daß das Volumen klein gehalten und ein Austrocknen des Präparates verhindert wird. Der Objektträgerhalter enthält vorzugsweise einen Wasserbehälter zur Feuchthaltung der Präparate. Dieser Wasserbehälter sorgt in Verbindung mit der abnehmbaren Abdeckung für erhöhte Luftfeuchtigkeit und verhindert damit das Austrocknen der Präparate. Bei Bedarf können bei einer derartigen Einrichtung mehrere Trennkammern auf dem Objektträger befestigbar sein.

Die immunologischen oder ähnlichen Nachweisuntersuchungen laufen derart ab, daß auf den Objektträgern Präparate angeordnet werden, auf den zu untersuchenden Bereich des jeweiligen Präparates eine Trennkammer zur Begrenzung der Untersuchungsfläche aufgesetzt und diese abgedichtet, dann - mehrmals wiederholt - eine Lösung in die Kammer gegeben und zu gegebener Zeit die Lösung mittels einer Pumpe abgesaugt wird. Gleichzeitig können die Präparate feucht gehalten und temperiert werden. Somit ist es möglich, alle Schritte des Untersuchungsverfahrens - das Fixieren des Präparates, die Inkubationen mit dem jeweiligen Antiserum sowie die Waschvorgänge - innerhalb dieser Kammer abzuwickeln. Dadurch wird der sonst oft anfallende, zeitraubende Arbeitsschritt des Abtrocknens umgangen, so daß unter Wahrung des geringen Reagenzienverbrauchs mehrere Untersuchungen mit kleinem Arbeitsaufwand parallel durchgeführt werden können.

Diese neue Ausgestaltung eröffnet außerdem in Verbindung mit bereits bekannten Automatisierungsvorrichtungen die Möglichkeit einer vollständigen Automatisierung des gesamten Untersuchungsverfahrens. Zu diesem Zweck müßten die Objektträger auf Magneten plaziert werden, welche sich ihrerseits an einer Transportvorrichtung befänden. Die aufgesetzten Trennkammern könnten dann von einer zentralen, elektronisch gesteuerten Einheit versorgt werden. Die automatische Version könnte insbesondere bei der Entwicklung tumorspezifischer monoklonaler Antikörper eingesetzt werden und deren Herstellungskosten entscheidend senken.

Bei der Herstellung von sog. Zytozentrifugenpräparaten für die anschließenden Nachweisuntersuchungen werden auf die Objektträger Kammern aufgesetzt, diese mit zellhaltigem Medium gefüllt und zentrifugiert. Durch die Zentrifugalkraft kommt es zum Ausbreiten der Zellen auf dem Objektträger. Die Befestigung der Kammern an dem Objektträger ist bisher durchweg kompliziert.

Eine Einrichtung, die insbesondere für Zytozentrifugenpräparate geeignet ist, weist vorzugsweise an dem Objektträgerhalter eine Befestigung gegen eine seitliche Bewegung der Trennkammer auf. Diese Befestigung kann mittels einer Loch-Stift-Verbindung erfolgen, wobei gleichzeitig der Objektträger zur Bildung einer einheitlichen Oberfläche in den Objektträgerhalter eingelassen ist. Als Loch-Stift-Verbindung können am Rand des Objektträgerhalters angeordnete Stifte oder Löcher, die in entsprechende Gegenstücke in der Trennkammer eingreifen, vorgesehen sein.

Die Erfindung wird nachfolgend anhand der begleitenden Zeichnungen näher erläutert. Es stellen dar:

Fig. 1 einen Querschnitt durch die Einrichtung,

Fig. 2 einen Querschnitt durch die Einrichtung mit einer Absaugdüse,

Fig. 3 eine Seitenansicht einer Absaugdüse mit seitlichen Öffnungen in Vergrößerung,

Fig. 4a einen Querschnitt durch eine Einrichtung mit mehreren Objektträgern, Magneten, Trennkammern und einer Abdeckung,

Fig. 4b eine Draufsicht auf die Einrichtung gemäß Fig. 4a,

Fig. 5a einen Querschnitt durch eine Einrichtung für Zytozentrifugenpräparate und

Fig. 5b eine Draufsicht auf eine Einrichtung gemäß Fig. 5a.

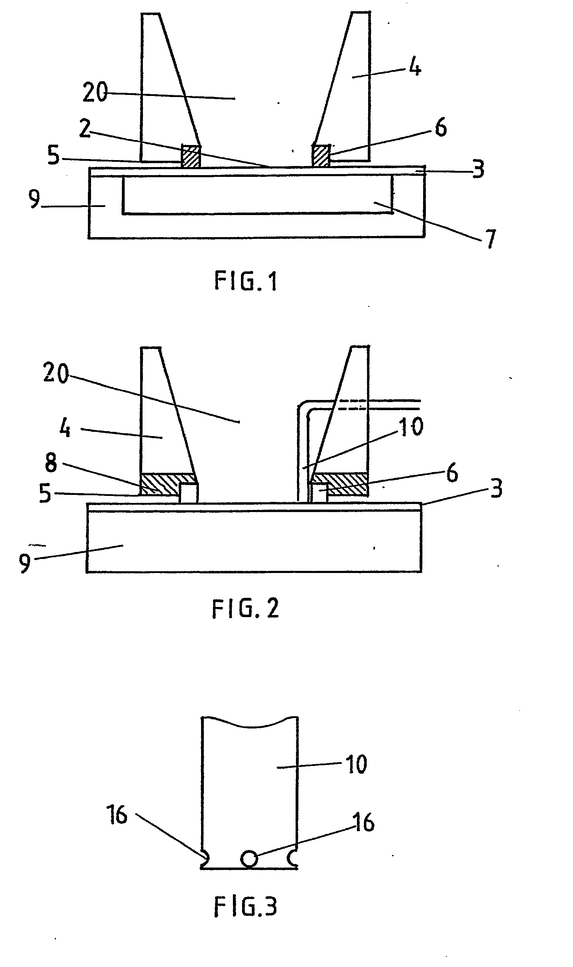

Wie aus Fig. 1 ersichtlich, wird der Objektträger 3 von einem Objektträgerhalter 9 gehalten, der unterhalb des Objektträgers einen Magneten 7 aufweist. Auf dem Objektträger befindet sich eine Trennkammer 4, deren Innenwand bei dieser Ausführungsform so ausgestaltet ist, daß der Innendurchmesser sich von unten nach oben vergrößert, so daß die Trennkammer einen trichterförmigen Querschnitt hat, wodurch die Zugänglichkeit erleichtert wird. An der dem Objektträger zugekehrten Seite 5 der Trennkammer befindet sich eine Dichtung 6, die das Wegfließen von Reagenzien aus dem Inneren 20 der Trennkammer 4 verhindert.

Fig. 2 zeigt eine ähnliche Ausgestaltung, wobei jedoch ein Magnet 8 an der dem Objektträger 3 zugekehrten Seite 5 der Trennkammer 4 angeordnet ist. Die selbstverständliche Voraussetzung für die Funktionsfähigkeit ist, daß der Objektträgerhalter unterhalb des Objektträgers wenigstens eine magnetisierbare Platte enthält. Desweiteren ist in Fig. 2 eine Absaugdüse 10 dargestellt, mit der die Reagenzien aus dem Innenraum 20 der Trennkammer 4 abgesaugt werden können.

Fig. 3 zeigt die Öffnungen 16 im Bereich des dem Objektträger zugekehrten Endes der Absaugdüse 10.

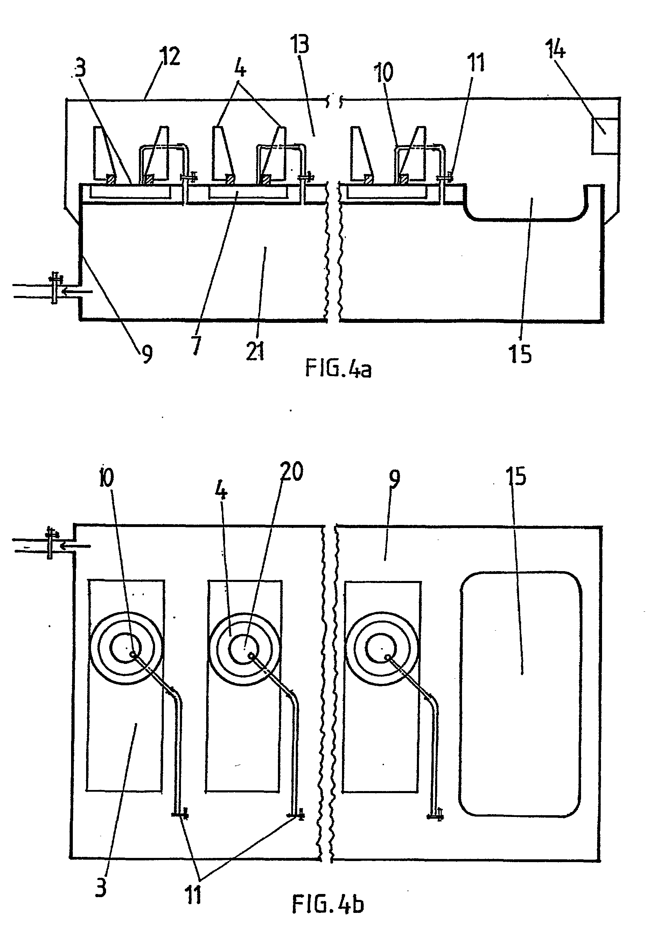

In Fig. 4a ist schematisch ein Objektträgerhalter 9 mit einem hohlen Innenraum 21 dargestellt, der mehrere Objektträger 3 und darunter angeordnete Magnete 7 sowie Ventile 11 und eine mit einem Pfeil gekennzeichnete Anschlußleitung für eine Absaugpumpe enthält. Auf den Objektträgern 3 befinden sich in bekannter Art und Weise die Trennkammern 4 sowie Absaugdüsen 10, die über die Ventile 11 mit dem Innenraum 21 des Objektträgerhalters 9 verbunden sind. Der Objektträgerhalter 9 weist außerdem einen Wasserbehälter 15 auf. Über den Objektträgerhalter 9 mit den Trennkammern 4 ist eine Abdeckung 12 gestülpt, die zusätzlich eine regelbare Heizeinrichtung 14 aufweist.

Aus der in Fig. 4b gezeigten Draufsicht ist die entsprechende Anordnung noch einmal von oben dargestellt.

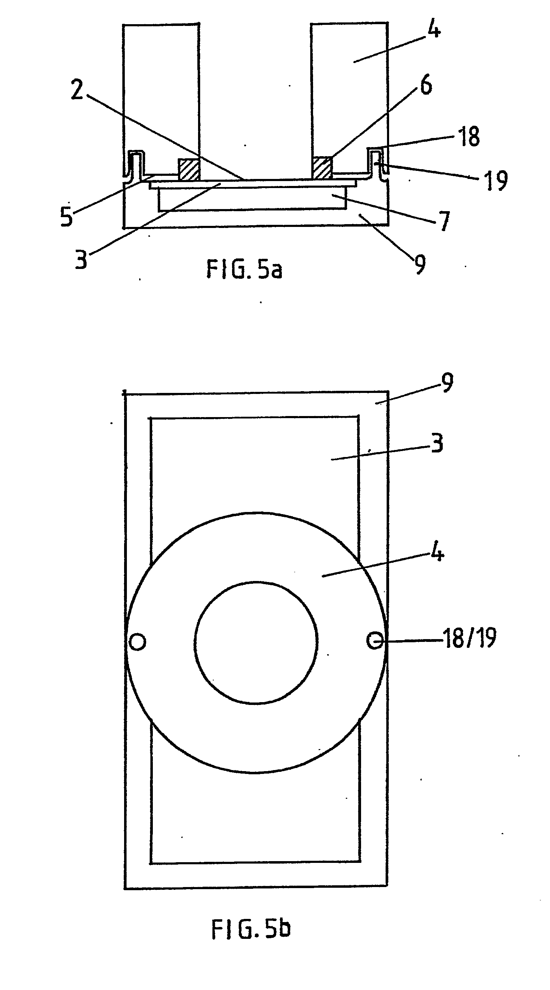

Eine Einrichtung insbesondere für Zytozentrifugenpräparate zeigt Fig. 5a mit einer Trennkammer 4, deren Wände durchgehend gleich stark sind, der bekannten Dichtung 6 sowie einem Magneten 7, der jedoch auch durch einen Magneten gemäß Fig. 2 in der Trennkammer 4 ersetzt werden kann. Die Trennkammer 4 weist Ausnehmungen 18 auf, in die Stifte 19 eingreifen, die an dem Objektträgerhalter 9 befestigt sind. Der Objektträger 3 ist in den Objektträgerhalter 9 zur Bildung einer einheitlichen Oberfläche 2 eingelassen. Auch können mehrere Stifte in entsprechende Ausnehmungen in die Trennkammer 4 eingreifen.

## Patentansprüche

1. Einrichtung für zytologische und histologische Untersuchungen an einem auf einem Objektträger (3) befindlichen Präparat, dadurch gekennzeichnet, daß eine auf das Präparat aufsetzbare, auf dem Objektträger (3) befestigbare und nach Gebrauch wieder abnehmbare Trennkammer (4) vorgesehen ist, die an ihrer dem Objektträger (3) zugewandten Stirnseite (5) mit einer einen zu untersuchenden Bereich des Präparates vom restlichen Bereich abtrennenden Dichtung (6) versehen ist.

2. Einrichtung nach Anspruch 1, wobei ein Objektträgerhalter einen oder mehrere Objektträger aufnimmt, dadurch gekennzeichnet, daß die Trennkammer (4) aus einem magnetisierbaren Werkstoff besteht und im Objektträgerhalter (9) unterhalb der Auflagefläche (2) des Objektträgers (3) ein Magnet (7) angeordnet ist, wobei der Magnet ein Permanentmagnet oder ein ein- und ausschaltbarer Elektromagnet ist, oder daß der Objektträger (3) oder wenigstens Teile des Objektträgerhalters (9) unterhalb des Objektträgers aus einem magnetisierbaren Material besteht und die Trennkammer (4) einen Magneten (8) aufweist.

3. Einrichtung nach Anspruch 1 oder 2, dadurch gekennzeichnet, daß in der Trennkammer (4) eine Absaugdüse (10) zur Entleerung der Kammer von flüssigen Reagenzien angeordnet ist.

4. Einrichtung nach Anspruch 3, dadurch gekennzeichnet, daß die Absaugdüse (10) im Bereich der dem Präparat zugeordneten Seite seitliche Öffnungen (16) aufweist.

5. Einrichtung nach Anspruch 3 oder 4, dadurch gekennzeichnet, daß die Absaugdüse (10) über ein Ventil (11) mit einem im Inneren hohl ausgebildeten Objektträgerhalter (9) verbunden ist, der an eine Pumpe angeschlossen ist.

6. Einrichtung nach einem der Ansprüche 2 bis 5, dadurch gekennzeichnet, daß zur Feuchthaltung der Präparate der Objektträgerhalter (9) einen Wasserbehälter (15) aufweist und zusammen mit der Trennkammer (4) von einer Abdeckung (12) umgeben ist.

7. Einrichtung nach einem der Ansprüche 1 bis 6, dadurch gekennzeichnet, daß mehrere Trennkammern (4) auf einem Objektträger (3) befestigbar sind.

8. Trennkammer für zytologische und histologische Untersuchungen, dadurch gekennzeichnet, daß sie als eine auf ein auf einem Objektträger (3) befindliches Präparat aufsetzbare Hülse (4) ausgebildet ist, die an ihrer dem Objektträger (3) zugewandten Stirnseite (5) mit einer Dichtung (6) versehen ist, und die auf dieser Stirnseite (5) aus einem magnetisierbaren Material besteht oder einen Magneten (8) aufweist, zur magnetischen Befestigung an einem den Objektträger (3) haltenden Objektträgerhalter (9).

9. Trennkammer nach Anspruch 8, insbesondere für die Herstellung von zytologischen Zentrifugenpräparaten, dadurch gekennzeichnet, daß in der Stirnseite (5) eine Ausnehmung (18) oder ein Stift zum Eingriff in einen entsprechenden einen Stift (19) oder eine Ausnehmung aufweisenden Objektträgerhalter (9) angeordnet ist.

10. Einrichtung bzw. Trennkammer nach einem der Ansprüche 1-9, dadurch gekennzeichnet, daß die Dichtung (6) aus einem Kunststoffmaterial oder aus Gummi besteht.

11. Verfahren zur Durchführung von zytologischen oder histologischen Untersuchungen an einem auf einem Objektträger (3) befindlichen Präparat, dadurch gekennzeichnet, daß zur Begrenzung einer Untersuchungsfläche des Präparates im gewünschten Bereich und zur Abdichtung der Untersuchungsfläche gegenüber dem Restbereich eine Trennkammer (4) auf das Präparat aufgesetzt wird, die an ihrer dem Präparat zugewandten Stirnseite (5) mit einer Dichtung (6) versehen ist, und daß anschließend in an sich bekannter Weise flüssige Reagenzien auf die Untersuchungsfläche gegeben und diese Reagenzien zu gegebener Zeit mittels einer Pumpe aus der Trennkammer (4) abgesaugt werden.

## Claims

1. System for cytological and histological examinations of a specimen spread on a specimen slide (3), characterized in that it comprises a separating chamber (4) mountable on the specimen slide (3) and detachable therefrom after use, the surface (5) of said separation chamber facing the specimen slide (3) comprising a sealing (6) separating the area of the specimen to be examined from the remaining area.

2. System according to claim 1 with a specimen slide holder taking one or several specimen slides, characterized in that the separating chamber (4) is of a magnetic material and that a magnet (7) is provided for within the specimen slide holder (9) below the supporting surface (3) with the magnet being a permanent magnet or a switch-on/switch-off electromagnet or that the specimen slide (3) or at least parts of the specimen slide holder (9) below the specimen slide are of magnetizable material with the separating chamber (4) comprising one magnet (8).

3. System according to claim 1 or 2, characterized in that the separating chamber (4) comprises a suction nozzle (10) for removing fluid reagents from the chamber.

4. System according to claim 3, characterized in that the area of the suction nozzle (10) facing the specimen comprises side openings (16).

5. System according to claim 3 or 4, characterized in that the suction nozzle (10) is connected with a specimen slide holder (9) by means of a valve (11), the inside of said specimen slide holder being hollow and said specimen slide holder being connected to a pump.

6. System according to one of claims 2 to 5, characterized in that, for purposes of keeping the specimens moist, the specimen slide holder (9) comprises a water tank (15) and said holder, tank as well as the separating chamber (4) being encompassed by a covering.

7. System according to one of claims 1 to 6, characterized in that several separating chambers (4) are mountable on a specimen slide (3).

8. Separating chamber for cytological and histological examinations, characterized in that it is a tube (4) placeable on a specimen spread on a specimen slide (3) the surface (5) of said tube facing the specimen slide (3) comprising a sealing (6) and said surface (5) being of a magnetizable material or a magnet (8) for magnetical affixing it to the specimen slide holder (9) carrying the specimen slide (3).

9. Separating chamber according to claim 8, particularly suitable for making cytological centrifugal preparations, characterized in that the surface (5) comprises a recess (18) or a pin for engaging in a specimen slide holder (9) comprising a respective pin (19) or a recess.

10. System or separating chamber, respectively, according to one of claims 1–9, characterized in that the sealing (6) is a synthetic material or rubber.

11. Process for conducting cytological or histological examinations of a specimen spread on a specimen slide (3), characterized in that for limiting an examination area of the specimen to the desired area and for sealing off the examination area from the remaining area a separating chamber (4) is placed on the specimen, the surface (5) of said separating chamber facing the specimen comprising a sealing (6) and furthermore characterized in that thereafter and in a known way fluid reagents are spread onto the examination area said reagents being sucked off from the separating chamber (4) by means of a pump when required.

## Revendications

1. Appareil pour examens cytologiques et histologiques sur une préparation se trouvant sur un porte-objet (3), caractérisé en ce qu'est prévue une chambre séparatrice (4) disposable sur la préparation, fixable sur le porte-objet (3) et de nouveau séparable après utilisation, chambre qui est munie sur son côté frontal (5) appliqué sur le porte-objet (3) d'une garniture (6) séparant un domaine de la préparation à étudier du domaine restant.

2. Appareil selon la revendication 1, dans lequel un support de porte-objet(s) supporte un ou plusieurs porte-objet(s), caractérisé en ce que la chambre séparatrice (4) est constituée d'un matériau magnétique et en ce qu'un aimant (7) est disposé dans le support de porte-objet(s) (9) sous la surface portante (2) du porte-objet (3), l'aimant étant un aimant permanent ou un électroaimant connectable et déconnectable, ou en ce que le porte-objet (3) ou au moins une partie du support de porte-objet(s) (9) sous le porte-objet, est constitué(e) d'un matériau magnétisable et en ce que la chambre séparatrice (4) présente un aimant (8).

3. Appareil selon la revendication 1 ou 2, caractérisé en ce qu'une buse d'aspiration (10) est disposée dans la chambre séparatrice (4) pour vider la chambre des réactifs liquides.

4. Appareil selon la revendication 3, caractérisé en ce que la buse d'aspiration (10) présente des ouvertures latérales (16) dans la zone du côté affecté à la préparation.

5. Appareil selon la revendication 3 ou 4, caractérisé en ce que la buse d'aspiration (10) est liée à un support de porte-objet(s) (9) de forme creuse à l'intérieur, par l'intermédiaire d'une soupape (11), lequel support est raccordé à une pompe.

6. Appareil selon l'une des revendications 2 à 5, caractérisé en ce que pour maintenir l'humidité de la préparation, le support de porte-objet(s) (9) présente un récipient à eau (15) et, ensemble avec la chambre séparatrice (4), est environné d'un couvercle (12).

7. Appareil selon l'une des revendications 1 à 6, caractérisé en ce que plusieurs chambres séparatrices (4) sont fixées sur un porte-objet (3).

8. Chambre séparatrice pour examens cytologiques et histologiques, caractérisée en ce qu'elle est constituée sous forme d'un manchon (4) disposable sur une préparation se trouvant sur un porte-objet (3), manchon qui est muni sur son côté frontal (5) appliqué sur le porte-objet (3), d'une garniture (6) et qui, sur ce côté frontal (5), est constitué d'un matériau magnétisable ou présente un aimant (8), pour la fixation magnétique à un support de porte-objet(s) (9) portant le porte-objet (3).

9. Chambre séparatrice selon la revendication 8, en particulier pour l'obtention de préparations de centrifugation cytologiques, caractérisée en ce que dans le côté frontal (5), est aménagée une encoche (18) ou une broche pour l'engrènement dans un support de porte-objet(s) (9) correspondant, présentant une broche (19) ou une encoche.

10. Appareil ou respectivement chambre séparatrice selon l'une des revendications 1–9, caractérisé(e) en ce que la garniture (6) est constituée d'une matière plastique ou de caoutchouc.

11. Procédé pour effectuer des examens cytologiques ou histologiques sur une préparation se trouvant sur un porte-objet (3), caractérisé en ce que, pour délimiter une surface ou zone d'examen de la préparation dans le domaine souhaité et pour étanchéifier la surface d'examen vis-à-vis du domaine restant, une chambre séparatrice (4) est disposée sur la préparation, chambre qui est munie sur son côté frontal (5) appliqué sur la préparation, d'une garniture (6), et en ce qu'ensuite des réactifs liquides sont apportés, de manière connue en soi, sur la surface d'examen, et en ce que ces réactifs sont aspirés hors de la chambre séparatrice (4), à un moment donné, au moyen d'une pompe.

FIG. 1

FIG. 2

FIG.3

FIG.4a

FIG.4b

FIG. 5a

FIG. 5b